# EUROPÄISCHE PATENTSCHRIFT

(11) **EP 0 522 320 B1**
(45) Veröffentlichungstag und Bekanntmachung des Hinweises auf die Patenterteilung: **27.11.1996**
(21) Anmeldenummer: 92110137.4
(22) Anmeldetag: 16.06.1992
(51) Int. Cl.: G02B 6/44

(54) **Verfahren und Einrichtung zur Herstellung eines optischen Kabels**
Method and device for manufacturing an optical cable
Procédé et dispositif pour la fabrication d'un câble optique

(30) Priorität: 21.06.1991 DE 4120571
(43) Veröffentlichungstag der Anmeldung: 13.01.1993
(73) Patentinhaber: SIEMENS AKTIENGESELLSCHAFT, 80333 München (DE)
(72) Erfinder: Oestreich, Ulrich, W-8000 München 70 (DE); Schneider, Reiner, W-8624 Ebersdorf (DE)

(56) Entgegenhaltungen:
- DE-A- 2 722 147
- DE-A- 3 502 768
- FR-A- 2 393 503
- FR-A- 2 509 275
- FR-A- 2 517 074
- GB-A- 1 457 868
- GB-A- 2 167 002
- GB-A- 2 197 497

## Beschreibung

Die Erfindung betrifft ein Verfahren zur Herstellung eines mindestens zwei Lichtwellenleiteradern enthaltenden optischen Kabels gemäß dem Oberbegriff des Anspruchs 1, sowie eine Vorrichtung zur Durchführung dieses Verfahrens.

Ein Verfahren dieser Art ist aus der DE-C2-31 11 963 und DE-A-27 22 147 bekannt. Dabei wird stets so vorgegangen, daß zunächst eine Lichtwellenleiter-Ader hergestellt wird, die als Zwischenprodukt, z.B. auf einem Teller oder einer Trommel gelagert wird. Aus mehreren derartigen Zwischenprodukten wird dann durch einen eigenen, an einem anderen Ort und zu einer anderen Zeit stattfindenden Verseilvorgang die Kabelseele zusammengesetzt. Die Verseilung selbst kann im Gleichschlag oder mit wechselnder Verseilrichtung (SZ-Verseilung) erfolgen. Das Auftrommeln oder die Ablage des Zwischenproduktes stellt einen zusätzlichen Arbeitsaufwand dar, und erfordert Lager- bzw. Abstellflächen.

Aus der DE-C2-25 23 738 und FR-A-2 393 503 ist ein Kabel bekannt, bei dem die Lichtwellenleiter in den Zwischenräumen (Kammern) eines festen Kernelementes untergebracht sind, das im Querschnitt z.B. etwa die Form eines Rades haben kann. In der Mitte ist meist ein zugfestes Zentralelement vorgesehen und die Gesamtstruktur wird in einem einzigen Arbeitsgang als geschlossenes, einteiliges Element hergestellt. Auch wenn dabei zunächst einzelne Hohladern hergestellt werden (FR 2 393 503), ist dafür gesorgt, daß deren Schutzhüllen aneinandergepreßt werden, so lange sie noch weich sind, so daß ein einheitlicher fester Kammerkörper entsteht. Der Nachteil derartiger Strukturen liegt vor allem darin, daß die Fasern oder Faserbündel von Anfang an in eine geschlossene starre Struktur eingelegt sind, die sehr biegesteif ist.

Der vorliegenden Erfindung liegt die Aufgabe zugrunde, ein Verfahren der eingangs genannten Art so weiterzubilden, daß ein durchgehender, rationeller und vielseitig verwendbarer Fertigungsprozeß für ein vorteilhaft aufgebautes optisches Kabel entsteht. Gemäß der Erfindung wird diese Aufgabe bei einem Verfahren der eingangs genannten Art dadurch gelöst, daß die Lichtwellenleiter einem Extruder außermittig in getrennten Bahnen zugeführt werden, daß durch diesen Extruder die mindestens zwei Lichtwellenleiteradern gleichzeitig hergestellt werden, und daß diese Lichtwellenleiteradern nach ausreichender Abkühlung und Erstarrung einander angenähert und unmittelbar danach einem Verseilvorgang zur Bildung eines Aderbündels unterworfen werden.

Bei der Erfindung werden somit Zwischenprodukte vermieden, weil die erzeugten Lichtwellenleiter-Adern unmittelbar nach ihrer Herstellung durch den Extruder zumindest partiell abgekühlt und direkt anschließend einem Verseilvorgang unterworfen werden. Es entfällt somit die Zwischenlagerung und Aufbewahrung der Lichtwellenleiter-Adern z.B. auf Trommeln oder Ablagetellern. Gegenüber einer Struktur mit einem geschlossene Längskanäle aufweisenden Kammerkabel-Kernelement ergibt sich der Vorteil, daß nur jeweils einfache Lichtwellenleiteradern hergestellt werden müssen, also Einzelelemente, die in bekannter Weise zu verseilen sind. Ein weiterer Vorteil besteht darin, daß sogar billige, nicht zwischenlagerungsfähige Hüllenmaterialien für die Lichtwellenleiteradern verwendet werden können, da sie unmittelbar nach dem Spitzen und Vorkühlen in der Kabelseele mechanisch fixiert werden.

Die Erfindung bezieht sich weiterhin auf eine Einrichtung zur Durchführung des erfindungsgemäßen Verfahrens, welche dadurch gekennzeichnet ist, daß ein Extruder vorgesehen ist, dessen Extruderkopf über den Umfang verteilt eine Reihe von durchgehenden Bohrungen aufweist, die zur Führung von Lichtwellenleitern dienen, daß konzentrisch hierzu Austrittsdüsen für extrudiertes Hüllenmaterial von Lichtwellenleiteradern vorgesehen sind, daß im Anschluß an den Extruder eine Kühleinrichtung derart vorgesehen ist, daß die Lichtwellenleiteradern ausreichend abgekühlt und erstarrt sind, und daß nach der Kühleinrichtung Mittel vorgesehen sind, die eine Verseilung der vom Extruderkopf kommenden Lichtwellenleiteradern ermöglichen.

Weiterbildungen der Erfindung sind in Unteransprüchen wiedergegeben.

Die Erfindung und ihre Weiterbildungen werden nachfolgend anhand von Zeichnungen näher erläutert.

Es zeigen:
- Fig. 1: in Seitenansicht eine Einrichtung zur Durchführung des erfindungsgemäßen Verfahrens,
- Fig. 2: im Querschnitt eine Darstellung eines Extruderkopfes für den Einsatz beim erfindungsgemäßen Verfahren,
- Fig. 3: im Querschnitt den Aufbau einer Lichtwellenleiter-Ader, die mit dem Extruderkopf nach Fig. 2 hergestellt ist,
- Fig. 4: im Querschnitt den Aufbau einer Kabelseele mit einer Lage von Lichtwellenleiteradern,
- Fig. 5: im Querschnitt eine Anordnung, bei der die Lichtwellenleiter-Adern über einen Steg mit einem Zentralelement verbunden sind,
- Fig. 6: eine gegenüber Fig. 1 abgewandelte Einrichtung zur Durchführung des erfindungsgemäßen Verfahrens,
- Fig. 7: eine weitere abgewandelte Einrichtung zur Durchführung des erfindungsgemäßen Verfahrens,
- Fig. 8: eine weitere Einrichtung zur Durchführung des erfindungsgemäßen Verfahrens und
- Fig. 9: eine mit Füllmaterial gefüllte Seele.

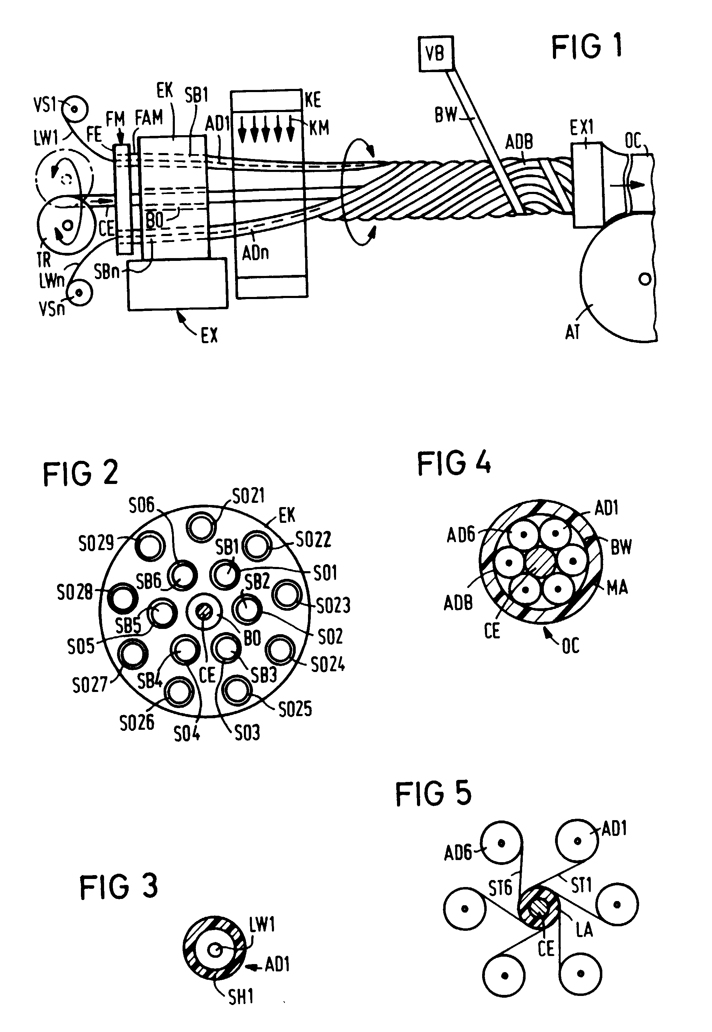

In Fig. 1 ist eine Vorratstrommel TR für ein zugfestes (z.B. aus stahl- oder glasfaserverstärktem Kunststoff bestehendes) Zentralelement CE vorgesehen. Das Zentralelement CE wird von links nach rechts durchlaufend abgezogen, wobei eine Rotation um die Längsachse des Verseilelementes durchgeführt wird.

Wenn eine SZ-Verseilung gewünscht ist, wird mit wechselnder Drehrichtung gearbeitet. Weiterhin ist ein Extruder EX vorgesehen, durch dessen Extruderkopf EK in einer zentralen Bohrung BO (vergleiche Fig. 2) das Zentralelement CE hindurchgeführt wird. Es ist auch möglich, über eine Fülleinrichtung FE auf das Zentralelement CE eine Füllmasse FM aufzubringen, bevor das Zentralelement CE in die entsprechend groß gestaltete Bohrung BO einläuft. Der Extruderkopf EK des Extruders EX weist eine Reihe von konzentrisch zur Bohrung BO verlaufenden ringförmigen Spritzöffnungen (Austrittsdüsen) auf, die im vorliegenden Beispiel mit SO1-SO6 bezeichnet sind. Im vorliegenden Beispiel ist angenommen, daß nur eine einzige Ader-Lage mit dem Spritzkopf EK hergestellt werden soll. Es ist aber auch möglich, eine mehrlagige Anordnung in einem Arbeitsgang z.B. dadurch herzustellen, daß weiter außen eine weitere Lage von kreisförmig angeordneten Austrittsdüsen SO21-SO29 vorgesehen wird, wodurch in einem einzigen Arbeitsgang eine zweilagig geschichtete Kabelseele herstellbar ist. Es ist auch möglich, (in Durchlaufrichtung gesehen) abgesetzt vom Extruder EX einen weiteren Extruder vorzusehen (z.B. dort, wo in Fig. 1 der Extruder EX1 dargestellt ist) und diesen Extruderkopf mit den Düsen SO21-SO29 zu versehen. Die Bohrung dieses Extruderkopfes muß natürlich so groß gewählt werden, daß das Aderbündel ADB hindurch geführt werden kann.

Die Führungs-Bohrungen für die Lichtwellenleiter erstrecken sich, wie in Fig. 1 für die Bohrung SB1 gestrichelt dargestellt, durch den ganzen Extruderkopf EX hindurch und ermöglichen so den Einlauf jeweils mindestens eines Lichtwellenleiters z.B. LW1, der von einer entsprechenden Vorratsspule VS1 abgezogen wird. Natürlich ist es auch möglich, mehrere Lichtwellenleiter in eine entsprechende Spritzdüse einzuziehen oder auch Lichtwellenleiter-Bändchen. Bei insgesamt n herzustellenden Lichtwellenleiter-Adern für den Aufbau einer Lage der Kabelseele sind entsprechend der schematischen Darstellung von Fig. 1 VS1-VSn Lichtwellenleiter-Vorratsspulen vorzusehen.

Von dem Extruderkopf EK werden im Bereich der Spritzdüsen SO1-SO6 schlauchförmige Schutzhüllen SH1 (vergleiche Fig. 3) erzeugt, die im Inneren mindestens einen Lichtwellenleiter LW1 enthalten, so daß die Gesamtanordnung eine Lichtwellenleiter-Ader AD1 bildet. Es ist auch möglich, das Innere der Lichtwellenleiter-Ader AD1 mit einer entsprechend weichen, z.B. thixotropierten Füllmasse zu füllen, wofür am Eingang des Extruderkopfes EK für jede der herzustellenden Adern AD1-ADn eine entsprechende Fülleinrichtung FE vorzusehen ist, der eine Füllmasse FM zugeführt wird. Die aufgebrachte Füllmasse FM kann mittels einer Abstreifeinrichtung FAM auf den gewünschten Außendurchmesser gebracht werden.

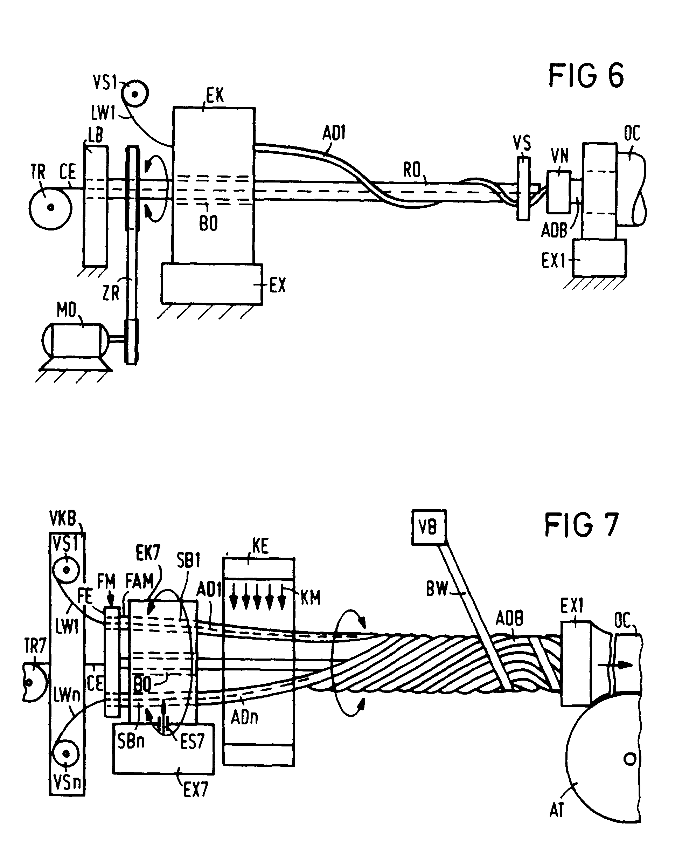

Die Schutzhüllen z.B. SH1 für die Lichtwellenleiter-Adern z.B. AD1 werden im Schlauchreckverfahren hergestellt, wobei unmittelbar am Anschluß an den Extruderkopf EK eine Kühleinrichtung KE vorgesehen ist, bei der die hier noch in einem entsprechenden Abstand voneinander verlaufenden Lichtwellenleiter-Adern AD1-ADn in radialer Richtung von einem Kühlmittel KM durchströmt werden. Dieses Kühlmittel KM kann kalte Luft oder auch z.B. kaltes Wasser sein. Nach ausreichender Abkühlung und Erstarrung werden die Lichtwellenleiter-Adern AD1-ADn einander zunehmend angenähert und zwar so stark, daß sie auf der Außenfläche des Zentralelementes CE aufliegen. In der Zeichnung sind die Adern AD1-ADn zur Vereinfachung der Darstellung in größerem Abstand vom Zentralelement CE gezeichnet - in Wirklichkeit liegen sie zumindest im Bereich des rechten Endes der Fig. 1 auf dem Zentralelement CE auf. Da die Ablauftrommel TR für das Zentralelement CE um die Längsachse des geradlinig durchlaufenden Zentralelementes CE rotiert (bei SZ-Verseilung in pendelnder Richtung) nimmt die Oberfläche des Zentralelementes CE die einzelnen Lichtwellenleiter-Adern AD1-ADn durch Reibungsschluß mit und bewirkt eine Verseilung, wie sie im rechten Teil der Fig. 1 dargestellt ist. Während dieser Verseilung kann eine Fortsetzung der Abkühlung erfolgen. Es ist auch möglich, mit feststehender Ablauf- und Aufwickeltrommel zu arbeiten, wie anhand der Figuren 6, 7 und 8 gezeigt wird.

Das so erhaltende Aderbündel ADB stellt eine Lage einer Kabelseele dar (samt dem Zentralelement CE) und zeigt beispielsweise die in Fig. 4 schematisch dargestellte Querschnittsform, wobei ein Aufseilen der SZ-förmig aufgebrachten Adern AD1-AD6 durch eine Bewicklung BW (abgezogen von einer Vorratsspule VB in Fig. 1) verhindert wird.

Das so erhaltende Aderbündel ADB kann einem weiteren Extruder EX1 zugeführt werden, der den Kabelmantel MA (vergleiche Fig. 4) aufbringt und so ein fertiges optisches Kabel OC herstellt. Die Erfindung gestattet es somit, in einem durchlaufenden Prozeß ausgehend von den Lichtwellenleitern LW1-LWn (bzw. Lichtwellenleiter-Bändchen) ein fertiges Kabel OC in einem einzigen durchlaufenden Prozeß herzustellen. Dabei kann mit hohen Fertigungsgeschwindigkeiten gearbeitet werden und eine Lagerung und Aufbewahrung von Zwischenprodukten ist nicht erforderlich. Das optische Kabel OC wird auf eine ebenfalls rotierende Aufwickeltrommel AT aufgewickelt. Der Mantelextruder EX1 wird aus der Verseilbewegung herausgehalten und wird ohne Drehung durchlaufen.

Für den Verseilprozeß der Einrichtung entsprechend Fig. 1 sorgt im wesentlichen die Haftreibung zwischen den einzelnen Adern AD1-ADn und dem Zentralelement CE. Sollte dies nicht ausreichend sein, dann könnte z.B. so vorgegangen werden, daß, wie in Fig. 5 dargestellt, auf das Zentralelement CE ein Belag LA vom Spritzkopf EK oder von der Fülleinrichtung FE mit aufgebracht wird. Zwischen diesem Belag LA und den Schutzhüllen der einzelnen LichtwellenleiterAdern AD1-AD6 könnten schmale dünne Verbindungsstege ST1-ST6 mit extrudiert werden, über die bei einer Verdrehung um die Längsachse des Zentralelementes CE zwangsweise die Adern AD1-AD6 mitgenommen und auf die Oberfläche des Zentralelementes CE aufgelegt werden. Da die Adern am Extruderkopf noch weich sind und erst nach vollständiger Abkühlung fest werden, gibt es keine Mitnahme-Probleme.

Durch den Krümmungsradius der schon bei Entstehung verseilten Adern AD2-ADn ρ = R/cos²α (R = Verseilradius, = Steigungswinkel) und den sich bei SZ-Verseilung ergebenden Krümmungswinkel β ≈ n · S/ρ (n = Schlagzahl zwischen zwei Umkehrpunkten, S = Schlaglänge) entsteht zwar einerseits eine systematische Unterlänge im Bereich 0,5 % . Andererseits ist ein ausreichender Kopplungswinkel für eine nachfolgende Kompensation infolge der Abkühlung und Schrumpfung gegeben. Die im Prozeß zu erzeugende "Überlänge" der Fasern, die ja nur den eintretenden Längenverlust etwas ausgleichen soll, kann auch in bekannter Weise durch elastische Vordehnung (und anschließend elastische Kontraktion) des Zentralelementes CE und/oder durch begrenztes Aufdrehen des Verseilzustandes nach dem Zuführen der Fasern geschehen, bzw. diese Vorgänge können mit dazu beitragen.

Auf diese Weise kann in einem Arbeitsgang ein Verseilverband erzeugt, besponnen und ummantelt werden, ohne für die Aderhüllen teure und schwer verarbeitbare Materialien verwenden zu müssen. Eine nachträgliche Längenänderung der an das Zentralelement gekoppelten Adern ist nicht möglich. Die mechanischen Eigenschaften der Adern können mit Rücksicht auf die unmittelbar folgende Ummantelung auf das absolut Notwendige beschränkt werden.

Da Extrusionswerkzeuge (d.h. Extrusionsköpfe) leicht austauschbar sind, öffnet sich hier eine wirtschaftliche Fertigung für Bündeladerkabel z.B. bis zu mindestens 100 Fasern, ohne das bei Kammerkabeln stets auftretende Problem der Faseraufteilung am Ende berücksichtigen zu müssen. Ebenso entfällt das bei Kammerkabeln stets auftretende Problem der Kammerkalibrierung und es lassen sich billigere Materialien verwenden, z.B. Poleolefine statt harter, teuerer Materialien.

Wenn der Verseilvorgang nicht oder nicht allein mit dem Zentralelement durchgeführt werden soll (z.B. wegen dessen geringem Durchmesser) kann eine Einrichtung entsprechend Fig. 6 benutzt werden. Der Aufbau des Extruderkopfes EK entspricht dem von Fig. 1, wobei hier zur Vereinfachung der Darstellung nur eine einzige Ader AD1 gezeichnet ist. Dagegen wird für den Verseilvorgang ein sogenannter Rohrspeicher verwendet, wozu ein einseitig eingespanntes Rohr RO vorgesehen ist, das in einem Lagerbock LB gehalten ist. Dieses Rohr RO erstreckt sich durch die Bohrung BO im Extruderkopf EK hindurch und reicht eine gewisse Länge über den Extruderkopf nach rechts hinaus. Auf jeden Fall muß es soweit geführt sein, daß die Adern AD1-ADn ausreichend fest auf dem Rohrspeicher RO aufliegen und durch Reibungsschluß mitgenommen werden. Für den Antrieb des Rohrspeichers RO ist ein Motor MO mit einem Zahnriemen ZR vorgesehen. Der Rohrspeicher RO wird zweckmäßig mit wechselnder Schlagrichtung betrieben und seine Oberflächenrauigkeit bestimmt zusammen mit der Länge der Auflage der jeweiligen Adern AD1-ADn die Intensität des Verseilvorganges. Am Ende des Rohrspeichers RO kann zur Verbesserung der Verseilung eine fest mit RO verbundene Verseilscheibe VS vorgesehen, die einen Lochkranz aufweist, durch dessen Öffnungen die Adern AD1-ADn hindurchgeführt werden. Nachfolgend ist in bekannter Weise ein Verseilnippel VN vorgesehen. Am rechten Ende der Verseileinrichtung liegt somit ebenfalls ein fertig verseiltes Bündel ähnlich ADB in Fig. 2 vor, das über einen weiteren Extruder EX1 ähnlich Fig. 1 mit einem Mantel versehen wird, so daß ausgangsseitig das fertige optische Kabel OC erhalten wird.

Es ist möglich, durch das Innere des Rohres RO ein Zentralelement CE1 hindurchzuziehen, das durch den Lagerbock LB mit hindurchgeführt wird und von einer feststehenden oder gegebenenfalls rotierenden Vorratstrommel TR (ähnlich Fig. 1) abläuft.

Es ist auch möglich, so wie in Fig. 7 dargestellt, mit in einem rotierenden Verseilkorb VKB untergebrachten Vorratsspulen VS1-VSn zu arbeiten und einen rotierenden Spritzkopf EK7 bzw. ein rotierendes Werkzeug EK vorzusehen. Der Spritzkopf bzw. das Werkzeug EK7 ist gegen den Ausströmkanal ES7 des Extruders EX7 abzudichten. Diese Rotation des Spritzkopfes kann in einer Richtung (Gleichschlagverseilung) oder in wechselnden Richtungen (SZ-Verseilung) erfolgen. Dafür braucht für das Zentralelement CE keine Rotation oder Verdrehung um die Längsachse der Durchlaufrichtung der gesamten Fertigungsanlage vorgenommen werden. Auch ist ein Auftrommeln auf eine rotierende Aufwickeltrommel AT nicht erforderlich. Die Fülleinrichtung FE rotiert zusammen mit dem Extruderkopf EK7.

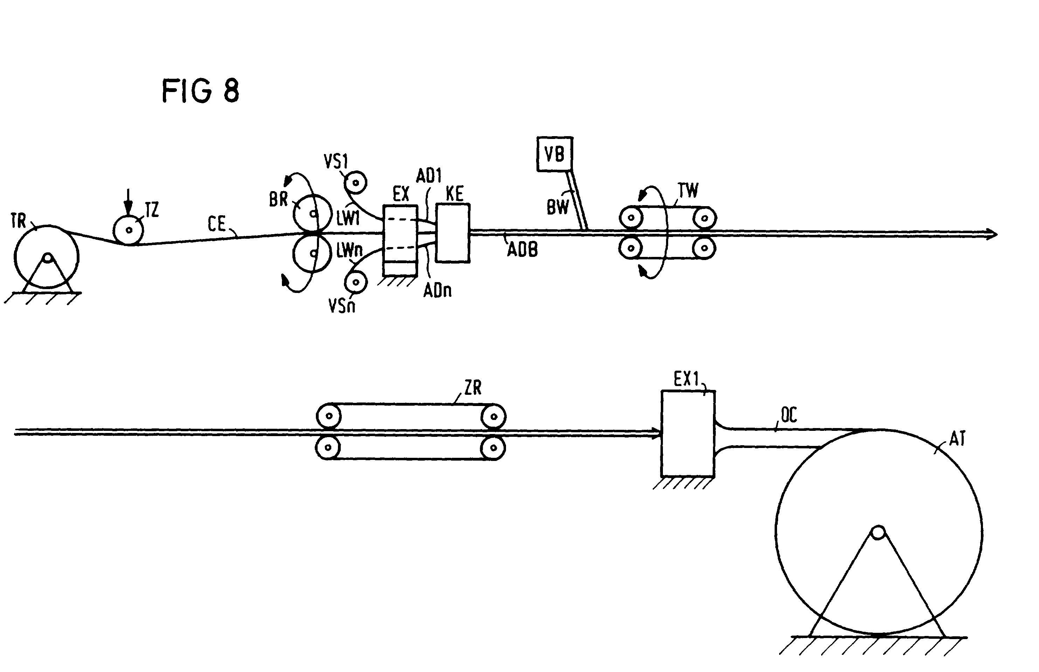

In Fig. 8 ist eine Einrichtung zur Durchführung des erfindungsgemäßen Verfahrens gezeichnet, welche eine Weiterbildung der Anordnung nach Fig. 1 darstellt. Deshalb sind soweit als möglich die dortigen Bezugszeichen hier für gleiche Teile wiederverwendet. Diese Einrichtung läßt sich in besonders vorteilhafter Weise zur SZ-Verseilung verwenden, weshalb nachfolgend immer eine Verseilung mit wechselnder Schlagrichtung zugrundegelegt wird.

Die Ablauftrommel TR ist hier feststehend ausgebildet, wobei das Zentralelement CE über einen Tänzer TZ abgezogen wird, der als Kraftbremse wirkt, so daß das Element CE im wesentlichen im gestreckten Zustand geführt wird. Die nachfolgende Bremse BR faßt das Zentralelement CE so fest, daß ein von weiter rechts ausgeübter Zug nicht über den Tänzer TZ bis zur Trommel TR gelangen kann. Diese Bremse BR kann in einfacher Weise durch zwei gebremste, das Zentralelement CE zwischen sich fest führende Scheibenräder gebildet werden; es ist aber auch eine Ausbildung als Raupe möglich. Das Zentralelement CE gelangt zum Extruderkopf des Extruders EX, dem die von feststehenden Vorratsspulen VS1-VSn abgezogenen Lichtwellenleitern LW1-LWn zugeführt werden. Die Extrusion des Aderbündels ADB und die nachfolgende Kühlung in der Einrichtung KE erfolgt ebenso wie die Aufbringung einer Haltewendel BW in der in Fig. 1 beschriebenen Weise. Das so erhaltene Aderbündel ADB wird einem Twister TW zugeführt, der hier als Raupenabzug dargestellt ist; es ist aber auch möglich, hierfür einen Scheibenabzug oder dergleichen zu verwenden.

Sowohl die Bremse BR als auch der Twister TW rotieren synchron miteinander mit wechselnden Umdrehungsrichtungen, um eine SZ-Verseilung der einzelnen Adern zu bewirken. Diese Verseilung wird durch den Mitnahmeeffekt zwischen den vom Extruder hergestellten Adern AD1-Adn einerseits und im Zentralelement CE andererseits bewirkt.

Schlaglängen für die SZ-Verseilung, die etwa zweckmäßig sind, liegen in der Größenordnung zwischen 50 mm und 300 mm; wobei alle 1 Schlag bis 6 Schläge etwa eine Umkehrstelle vorgesehen werden kann.

Vor der Bremse BR und nach dem Twister TW sollte ein längerer Torsionsspeicher vorgesehen, für den eine im wesentlichen geradlinige Führung des Aderbündels in einer Länge zwischen 2 m und 20 m zweckmäßig ist. (Je dicker das Zentralelement CE ist, umso länger der Torsionsspeicher). Im Bereich dieses Torsionsspeichers können gegebenenfalls z.B. als Führungen eine weitere (nicht dargestellte) Raupe oder dergleichen vorgesehen sein.

Beim SZ-Twister-Verfahren sind zwei Speicher notwendig, wobei der erste für die Vorverdrehung des Zentralelementes dient und der zweite für die Rück-Verdrehung der fertigen Seele.

Für die Längsbewegung des Zentralelementes bzw. des Aderbündels ist eine eigene Zugraupe ZR am Ende des Torsionsspeichers vorgesehen, die feststehend ausgebildet ist, also nicht rotiert. Diese Zugraupe ZR bewirkt das Hindurchziehen des Zentralelement CE bzw. des Aderbündels durch die verschiedenen Fertigungsstufen.

In dem anschließenden Extruder EX1 wird der Mantel aufgebracht, so daß das fertige optische Kabel OC auf die feststehende Aufwickeltrommel AT aufgelegt werden kann.

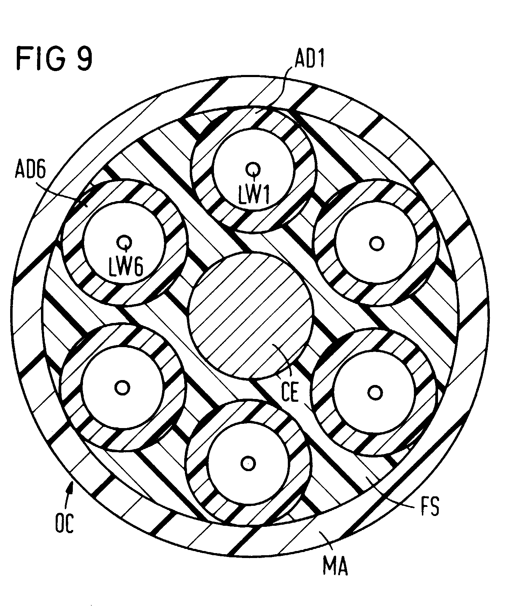

In Fig. 9 ist ein Querschnitt einer Kabelseele dargestellt, bei der ein Füllmaterial oder eine Füllschicht FS zwischen dem Zentralelement CE und den Lichtwellenleiter-Adern AD1-AD6 vorgesehen ist. Das Material für dieses Füllmaterial kann etwas klebrig oder in seiner Viskosität zumindest zäh sein, und kann bei einem rotierenden Zentralelement CE entsprechend Fig. 1 eine gute Mitnahme der einzelnen Adern AD1-AD6 bewirken. Das Füllmaterial FS stellt die Längsdichtigkeit zwischen dem Zentralelement CE und den einzelnen Adern sowie den einzelnen Adern untereinander her. Es ist in der Praxis nicht notwendig, daß ( - wie in Fig. 9 dargestellt - ) größere Zwischenräume zwischen den einzelnen Adern AD1-AD6 und dessen Adern und dem Zentralelement CE mit Füllmaterial aufgefüllt werden; die großen Abstände dienen hier im wesentlichen der besseren Verdeutlichung des Aufbaus.

Es genügt im Grunde, die Zwickelbereiche bei eng aneinander stoßenden oder fast aneinander stoßenden Adern AD1-AD6 mit dem Füllmaterial FS zu füllen. Im gewissen Umfang wirkt das Füllmaterial FS auch als Trennmittel zwischen den einzelnen Adern.

Das Füllmaterial FS kann etwa gummielastische Eigenschaften aufweisen; auf diese Weise kann die einzelne Ader bei Bedarf aus dem Seelenverband radial nach außen gezogen und gegebenenfalls auch wieder in die Kabelseele hineingedrückt werden. Die Füllsubstanz FS ist zweckmäßig entweder fest und nur lose gebunden oder fettartig. Es entsteht somit bei einem etwa zäh-weichen Aufbau der Füllsubstanz FS zwar eine kompakte Kabelseele, die jedoch noch eine gewisse Beweglichkeit für die Lichtwellenleiteradern zuläßt. Die Querdruckfestigkeit einer derartigen Anordnung ist groß und es ergeben sich geringe Längenänderungen bei Temperaturwechsel. Ein derartiges - noch zusätzlich außen mit einem Kabelmantel MA versehenes - Kabel läßt sich gut und sicher einziehen und ist vor allem sehr montagefreundlich. Wegen der guten Querdruckfestigkeit kann das Zentralelement CE die erforderlichen Kräfte weitgehend allein übernehmen, so daß im Normalfall auf eine äußere Bewehrung (im Mantelbereich) verzichtet werden kann.

Die Füllsubstanz FS wird zweckmäßig über Kanäle z.B. beim Extruderkopf EK zugeführt, ähnlich wie die Füllmasse FM. So können z.B. die Düsen SO1, SO3, SO5 nach Fig. 2 für die Bildung von Lichtwellenleiteradern eingesetzt werden, während die Düsen SO2, SO4, SO6 für die Zuführung der Füllsubstanz dienen. Die Füllsubstanz FS kann auch in einer entsprechend dicken Lage mittels der Fülleinrichtung FE aufgebracht werden. Das Zentralelement CE kann auch ein z.B. armiertes Minibündel mit einer Anzahl von Lichtwellenleiter-Adern sein.

## Patentansprüche

1. Verfahren zur Herstellung eines mindestens zwei Lichtwellenleiteradern (AD1 - ADn) enthaltenden optischen Kabels (OC) wobei durch Extrusion mindestens zwei jeweils mindestens einen Lichtwellenleiter (LW1 - LWn) umschließende und eine selbständige Lichtwellenleiterader (AD1 - ADn) bildende Umhüllungen (SH1) hergestellt werden und wobei außen ein Kabelmantel (MA) aufgebracht wird, **dadurch gekennzeichnet,**
daß die Lichtwellenleiter (LW1 - LWn) einem Extruder (EX) außermittig in getrennten Bahnen zugeführt werden,
daß durch diesen Extruder (EX) die mindestens zwei Lichtwellenleiteradern (AD1-ADn) gleichzeitig hergestellt werden und
daß diese Lichtwellenleiteradern (AD1 - ADn) nach ausreichender Abkühlung und Erstarrung einander angenähert und unmittelbar danach einem Verseilvorgang zur Bildung eines Aderbündels (ADB) unterworfen werden.

2. Verfahren nach Anspruch 1,
**dadurch gekennzeichnet**,
daß zur Durchführung des Verseilvorganges bei feststehendem Extruder (EX) ein im Zentrum des Aderbündels (ADB) verlaufendes, um seine Längsachse rotierendes Zentralelement (CE) verwendet wird, das von einer Vorratstrommel abgezogen wird.

3. Verfahren nach Anspruch 2,
**dadurch gekennzeichnet**,
daß eine um die Längsachse des abgezogenen Zentralelementes rotierende Vorratstrommel (TR) verwendet wird und daß das fertige optische Kabel (OC) auf eine ebenfalls um die Längsachse des Zentralelementes (CE) rotierende Trommel (AT) aufgewickelt wird.

4. Verfahren nach einem der Ansprüche 2 oder 3,
**dadurch gekennzeichnet**,
daß die Lichtwellenleiteradern (AD1-ADn) auf ein raumfestes Rohr (RO) aufgelegt werden, daß dieses Rohr (RO) eine Rotationsbewegung ausführt und daß die Lichtwellenleiteradern (AD1-ADn) durch die Drehung des Rohres bzw. einer Verseilscheibe (VS) einer Verseilung unterworfen werden.

5. Verfahren nach Anspruch 4,
**dadurch gekennzeichnet,**
daß durch das Innere des Rohres (RO) das Zentralelement (CE) hindurchgeführt wird.

6. Verfahren nach einem der Ansprüche 2 bis 5,
**dadurch gekennzeichnet,**
daß das Zentralelement (CE) mittels einer um die Durchlaufachse rotierenden Bremse (BR) gefaßt und tordiert wird, daß auf das so durch die Tordierung rotierende Zentralelement (CE) die Lichtwellenleiteradern (AD1-ADn) aufgelegt und verseilt werden und daß das so erhaltene Aderbündel (ADB) von einem um die Durchlaufachse rotierenden Twister (TW) gefaßt und in gleicher Weise wie durch die Bremse (BR) rotiert wird.

7. Verfahren nach Anspruch 6,
**dadurch gekennzeichnet,**
daß die Abwickeltrommel (TR) für das Zentralelement (CE) und die Aufwickeltrommel (AT) für das optische Kabel (OC) raumfest betrieben werden.

8. Verfahren nach Anspruch 6 und 7,
**dadurch gekennzeichnet,**
daß vor dem Einlauf in die Bremse (BR) das Zentralelement (CE) über einen als Kraftbremse wirkenden Tänzer (TZ) geführt wird

9. Verfahren nach den Ansprüchen 6 bis 8,
**dadurch gekennzeichnet,**
daß vor der Bremse und nach dem Twister (TW) das Aderbündel (ADB) über eine größere Länge, insbesondere 2 bis 20 m frei geführt wird, wobei diese Führung als Torsionsspeicher benutzt wird.

10. Verfahren nach den Ansprüchen 6 bis 9,
**dadurch gekennzeichnet,**
daß das Aderbündel (ADB) nach Verlassen des Twister (TW) einer Zugraupe (ZR) zugeführt wird, die der Kraftsteuerung für den Durchzug des Zentralelementes bzw. des Aderbündels (ADB) dient.

11. Verfahren nach Anspruch 1,
**dadurch gekennzeichnet,**
daß die Abwickeltrommel (TR7) für das Zentralelement (CE) und die Aufwickeltrommel (AT7) für das optische Kabel (OC) raumfest betrieben werden, daß die Vorratsspulen (VS1-VSn) in einem Verseilkorb (VK) angeordnet und zusammen mit diesem ebenfalls rotierend betrieben werden und daß der Extruderkopf (EK7) des zur Bildung der Lichtwellenleiteradern (AD1-ADn) dienenden Extruders (EX7) rotierend betrieben wird.

12. Verfahren nach einem der vorhergehenden Ansprüche,
**dadurch gekennzeichnet,**
daß die Lichtwellenleiter durch Bohrungen (SB1-SB6) im Extruderkopf (EK) hindurchgeführt werden, wobei diese Bohrungen konzentrisch zu den Austrittsdüsen (SO1-SO6) für die Bildung der Aderhülle (SH1) der jeweiligen Lichtwellenleiterader (AD1) angeordnet werden.

13. Verfahren nach einem der vorhergehenden Ansprüche,
**dadurch gekennzeichnet,**
daß mehrere Lagen von jeweils gleichzeitig extrudierten Lichtwellenleiteradern aufgebracht werden.

14. Verfahren nach Anspruch 13,
**dadurch gekennzeichnet,**
daß aus einem Extruderkopf (EK) ringförmig zwei in unterschiedlichen Durchmessern erhaltene Lagen von Lichtwellenleiteradern erzeugt werden.

15. Verfahren nach einem der Ansprüche 1 bis 13,
**dadurch gekennzeichnet**,
daß in einem ersten Extruder eine erste Lage von Lichtwellenleitern erzeugt und zu einem Aderbündel zusammengefaßt wird und daß zeitlich danach mittels eines zweiten Extruders eine weitere Lage von Lichtwellenleiteradern auf das erste Aderbündel aufgebracht wird.

16. Verfahren nach einem der vorhergehenden Ansprüche,
**dadurch gekennzeichnet**,
daß die Verseilung der Adern (AD1-ADn) mit wechselnder Schlagrichtung, d.h. in SZ-Verseilung, durchgeführt wird.

17. Einrichtung zur Durchführung des Verfahrens nach einem der vorhergehenden Ansprüche,
**dadurch gekennzeichnet**,
daß ein Extruder (EX) vorgesehen ist, dessen Extruderkopf (EK) über den Umfang verteilt eine Reihe von durchgehenden Bohrungen (SB1 - SBn) aufweist, die zur Führung von Lichtwellenleitern (LW1 - LWn) dienen,
daß konzentrisch hierzu Austrittsdüsen (SO1 - S06) für extrudiertes Hüllenmaterial von Lichtwellenleiteradern (AD1 - ADn) vorgesehen sind,
daß im Anschluß an den Extruder eine Kühleinrichtung (KE) derart vorgesehen ist, daß die Lichtwellenleiteradern (AD1 - ADn) ausreichend abgekühlt und erstarrt sind, und
daß nach der Kühleinrichtung (KE) Mittel vorgesehen sind, die eine Verseilung der vom Extruderkopf kommenden Lichtwellenleiteradern (AD1 - ADn) ermöglichen.

18. Einrichtung nach Anspruch 17,
**dadurch gekennzeichnet**,
daß vor dem Extruder (EX) eine Ablauf trommel (TR) für ein Zentralelement (CE) vorgesehen ist.

19. Einrichtung nach Anspruch 18,
**dadurch gekennzeichnet**,
daß Tordierungseinrichtungen für das Zentralelement (CE) vorgesehen sind derart, daß die Lichtwellenleiteradern (AD1-ADn) durch Mitnahme eine Verseilung aufgeprägt erhalten.

20. Einrichtung nach Anspruch 19,
**dadurch gekennzeichnet,**
daß die Ablauftrommel (TR) für das Zentralelement (CE) und die Aufwickeltrommel (AT) für das fertige Kabel (OC) um die Längsachse des gestreckten Zentralelementes (CE) rotierend ausgebildet sind.

21. Einrichtung nach Anspruch 19,
**dadurch gekennzeichnet,**
daß die Vorratstrommel (TR) für das Zentralelement (CE) und die Aufwickeltrommel (AT) für das fertige Kabel (OC) raumfest angeordnet sind, daß vor dem Extruder (EX) eine um die Längsachse des Zentralelementes (CE) rotierende Bremse (BR) vorgesehen ist, die dem Zentralelement (CE) eine Torsion aufprägt und daß nach dem Extruder (EX) ein das aus den Lichtwellenleiteradern gebildete Lichtwellenleiterbündel (ADB) fassender Twister vorgesehen ist, der ebenfalls um die Längsachse des Zentralelementes (CE) rotiert und daß der Antrieb für die Rotationsbewegungen sowohl der Bremse (BR) als auch des Twister (TW) derart erfolgt, daß beide synchron und in der gleichen Richtung rotieren.

22. Einrichtung nach Anspruch 21,
**dadurch gekennzeichnet,**
daß nach dem Twister (TW) eine als Torsionsspeicher dienende gerade Führung des Aderbündels (ADB) vorgesehen ist, vorzugsweise über eine Länge zwischen 2 m und 20 m.

23. Einrichtung nach den Ansprüchen 21 oder 22,
**dadurch gekennzeichnet,**
daß nach dem Twister (TW) in einem entsprechenden Abstand eine Zugraupe (ZR) vorgesehen ist, welche den notwendigen Längszug auf das Zentralelement (CE) bzw. das Aderbündel (ADB) ausübt.

24. Einrichtung nach einem der Ansprüche 20 bis 23,
**dadurch gekennzeichnet,**
daß die Mittel für die Durchführung des Verseilvorgangs so ausgelegt sind, daß sich eine wechselnde Verseilrichtung (SZ-Verseilung) der Lichtwellenleiteradern (AD1-ADn) ergibt.

25. Einrichtungen nach Anspruch 24,
**dadurch gekennzeichnet,**
daß nach dem Extruder (EX) Mittel (VB) zur Aufbringung einer Haltewendel (BW) auf das Aderbündel (ADB) vorgesehen sind.

26. Einrichtung nach einem der Ansprüche 21 bis 25,
**dadurch gekennzeichnet,**
daß die Abwickeltrommel (TR) und die Aufwickeltrommel (AT) raumfest angeordnet sind.

27. Einrichtung nach einem der Ansprüche 17 bis 26,
**dadurch gekennzeichnet,**
daß mindestens ein weiterer Extruder (EX1) für die Aufbringung eines Kabelmantels vorgesehen ist.

28. Einrichtung nach einem der Ansprüche 17 bis 27,
**dadurch gekennzeichnet,**
daß der Extruderkopf (EK) eine zentrale Bohrung (BO) aufweist, durch die das Zentralelement (CE) hindurchführbar ist.

29. Einrichtung nach einem der Ansprüche 17 bis 28,
**dadurch gekennzeichnet,**
daß der Extruderkopf (EK) mehrere konzentrische Reihen von Spritzdüsen (SO1-SO6, SO21-SO29) aufweist, die zur Bildung einer zweiten Lage von Lichtwellenleiteradern dient.

30. Einrichtung nach einem der Ansprüche 17 bis 29,
**dadurch gekennzeichnet,**
daß mehrere Extruder mit Abstand voneinander angeordnet sind, daß jeder dieser Extruder eine kreisförmige Anordnung von Austrittsdüsen aufweist, derart, daß jeder der Extruder mindestens eine Lage von Lichtwellenleiteradern zur Bildung des Aderbündels liefert.

31. Einrichtung nach einem der Ansprüche 17 bis 19,
**dadurch gekennzeichnet**,
daß ein Rohrspeicher (RO) vorgesehen ist, welcher einseitig gelagert ist und eine Antriebseinrichtung (ZR, MO) aufweist, daß der Rohrspeicher (RO) durch eine zentrale Bohrung (BO) des Extruderkopfes (EK) hindurchgeführt ist und daß die Lichtwellenleiteradern (AD1-ADn) auf dem freien Ende des Rohrspeichers (RO) aufliegen und durch diesen mit einer Verseilung beaufschlagt sind.

32. Einrichtung nach Anspruch 31,
**dadurch gekennzeichnet**,
daß der Rohrspeicher (RO) eine durchgehende Bohrung aufweist, die zur Führung des Zentralelementes (CE1) dient.

33. Einrichtung nach einem der Ansprüche 17-32,
**dadurch gekennzeichnet**,
daß vor dem Extruderkopf (EK) eine Fülleinrichtung (FE) vorgesehen ist, durch welche die Lichtwellenleiter (LW1-LWn) hindurchführbar sind und daß diese Fülleinrichtung (FE) eine als Aderfüllmasse dienende Substanz (FM) zugeführt ist.

34. Einrichtung nach einem der Ansprüche 17 bis 19,
**dadurch gekennzeichnet**,
daß eine raumfeste Vorratstrommel (TR) für das Zentralelement (CE) vorgesehen ist, daß der Extruderkopf (EK7) für die Erzeugung der Lichtwellenleiteradern (AD1-ADn) um die Längsachse des Zentralelementes (CE) rotierend ausgebildet ist, daß die Vorratsspulen (VS1-VSn) für die Lichtwellenleiter in einem rotierenden Verseilkorb (VK) untergebracht sind und daß die Aufwickeltrommel (AT7) für das fertige Kabel bzw. das Aderbündel ebenfalls raumfest angeordnet ist (Fig. 7).

## Claims

1. Method for producing an optical cable (OC) containing at least two buffered optical fibres (AD1 - ADn), at least two jackets (SH1) which respectively surround at least one optical fibre (LW1 - LWn) and form an independent buffered optical fibre (AD1 - ADn) being produced by extrusion and a cable sheath (MA) being applied on the outside, characterized in that the optical fibres (LW1 - LWn) are fed to an extruder (EX) eccentrically in separate paths, in that the at least two buffered optical fibres (AD1 - ADn) are produced simultaneously by this extruder (EX), and in that these buffered optical fibres (AD1 - ADn) are brought close to one another after adequate cooling and setting, and immediately thereafter are subjected to a stranding operation in order to form a multifibre unit (ADB).

2. Method according to Claim 1, characterized in that in order to carry out the stranding operation in the case of a stationary extruder (EX), use is made of a central element (CE) which extends in the centre of the multifibre unit (ADB), rotates about its longitudinal axis and is hauled off from a supply drum.

3. Method according to Claim 2, characterized in that use is made of a supply drum (TR) rotating about the longitudinal axis of the hauled-off central element, and in that the finished optical cable (OC) is wound onto a drum (AT) likewise rotating about the longitudinal axis of the central element (CE).

4. Method according to one of Claims 2 or 3, characterized in that the buffered optical fibres (AD1-ADn) are placed on a space-fixed tube (RO), in that this tube (RO) executes a rotary movement, and in that the buffered optical fibres (AD1-ADn) are subjected to stranding by the rotation of the tube or of a stranding disc (VS).

5. Method according to Claim 4, characterized in that the central element (CE) is guided through the interior of the tube (RO).

6. Method according to one of Claims 2 to 5, characterized in that the central element (CE) is seized and twisted by means of a brake (BR) rotating about the transit axis, in that the buffered optical fibres (AD1-ADn) are placed on the central element (CE) thus rotating owing to the twisting and are stranded, and in that the multifibre unit (ADB) thus obtained is seized by a twister (TW) rotating about the transit axis and is rotated in the same way as by the brake (BR).

7. Method according to Claim 6, characterized in that the pay-out drum (TR) for the central element (CE) and the take-up drum (AT) for the optical cable (OC) are operated in a fashion fixed in space.

8. Method according to Claims 6 and 7, characterized in that before entering the brake (BR), the central element (CE) is guided over a dancing roller (TZ) acting as a power brake.

9. Method according to Claims 6 to 8, characterized in that upstream of the brake and downstream of the twister (TW) the multifibre unit (ADB) is freely guided over a relatively large length, in particular 2 to 20 m, this guidance being used as a torsion store.

10. Method according to Claims 6 to 9, characterized in that after leaving the twister (TW) the multifibre unit (ADB) is fed to a caterpillar tractor (ZR) which serves to control the force pulling through the central element or the multifibre bundle (ADB).

11. Method according to Claim 1, characterized in that the pay-out drum (TR7) for the central element (CE) and the take-up drum (AT7) for the optical cable (OC) are operated in a fashion fixed in space, in that the supply reels (VS1-VSn) are arranged in a stranding basket (VK) and are likewise operated together with the latter in a rotating fashion, and in that the extruder head (EK7) of the extruder (EX7) serving to form the buffered optical fibres (AD1-ADn) is operated in a rotating fashion.

12. Method according to one of the preceding claims, characterized in that the optical fibres are guided through bores (SB1-SB6) in the extruder head (EK), said bores being arranged concentrically with the discharge nozzles (SO1-SO6) for forming the fibre buffer (SH1) of the respective buffered optical fibre (AD1).

13. Method according to one of the preceding claims, characterized in that a plurality of layers of buffered optical fibres respectively extruded simultaneously are applied.

14. Method according to Claim 13, characterized in that two layers, obtained in different diameters, of buffered optical fibres are produced in an annular fashion from an extruder head (EK).

15. Method according to one of Claims 1 to 13, characterized in that a first layer of optical fibres is produced in a first extruder and combined to form a multifibre unit, and in that at a time thereafter a second extruder is used to apply a further layer of buffered optical fibres to the first multifibre unit.

16. Method according to one of the preceding claims, characterized in that the stranding of the buffered fibres (AD1-ADn) is carried out with an alternating direction of lay, that is to say by means of SZ stranding.

17. Device for carrying out the method according to one of the preceding claims, characterized in that an extruder (EX) is provided whose extruder head (EK) has a row of continuous bores (SB1-SBn) distributed over the circumference, which serve to guide optical fibres (LW1-LWn), in that discharge nozzles (SO1-SO6) for extruded buffer material of buffered optical fibres (AD1-ADn) are provided concentrically therewith, in that a cooling device (KE) is provided following the extruder in such a way that the buffered optical fibres (AD1-ADn) are ade quately cooled and set, and in that means are provided downstream of the cooling device (KE) which permit the buffered optical fibres (AD1-ADn) coming from the extruder head to be stranded.

18. Device according to Claim 17, characterized in that a supply drum (TR) for a central element (CE) is provided upstream of the extruder (EX).

19. Device according to Claim 18, characterized in that twisting means for the central element (CE) are provided in such a way that the buffered optical fibres (AD1-ADn) are pressed upon the central element and stranded through being entrained.

20. Device according to Claim 19, characterized in that the supply drum (TR) for the central element (CE) and the take-up drum (AT) for the finished cable (OC) are constructed to rotate about the longitudinal axis of the elongated central element (CE).

21. Device according- to Claim 19, characterized in that the supply drum (TR) for the central element (CE), and the take-up drum (AT) for the finished cable (OC) are arranged fixed in space, in that there is provided upstream of the extruder (EX) a brake (BR) which rotates about the longitudinal axis of the central element (CE) and which impresses a torsion onto the central element (CE), and in that there is provided downstream of the extruder (EX) a twister which seizes the multifibre unit (ADB) formed from the buffered optical fibres and likewise rotates about the longitudinal axis of the central element (CE), and in that the drive for the rotary movements both of the brake (BR) and of the twister (TW) is performed in such a way that both rotate synchronously and in the same direction.

22. Device according to Claim 21, characterized in that a straight guide of the multifibre unit (ADB) which serves as a torsion store is provided downstream of the twister (TW), preferably over a length of between 2 m and 20 m.

23. Device according to one of Claims 21 or 22, characterized in that provided downstream of the twister (TW) at an appropriate distance is a caterpillar tractor (ZR) which exerts the required longitudinal traction on the central element (CE) or the multifibre unit (ADB).

24. Device according to one of Claims 20 to 23, characterized in that the means for carrying out the stranding operation are designed so as to produce an alternating stranding direction (SZ stranding) of the buffered optical fibres (AD1-ADn).

25. Device according to Claim 24, characterized in that means (VB) for applying a binder (BW) to the multifibre unit (ADB) are provided downstream of the extruder (EX).

26. Device according to one of Claims 21 to 25, characterized in that the pay-out drum (TR) and the take-up drum (AT) are arranged fixed in space.

27. Device according to one of Claims 17 to 26, characterized in that at least one further extruder (EX1) is provided for applying a cable sheath.

28. Device according to one of Claims 17 to 27, characterized in that the extruder head (EK) has a central bore (BO) through which the central element (CE) can be guided.

29. Device according to one of Claims 17 to 28, characterized in that the extruder head (EK) has a plurality of concentric rows of injection nozzles (SO1-SO6, SO21-SO29) which serve to form a second layer of buffered optical fibres.

30. Device according to one of Claims 17 to 29, characterized in that a plurality of extruders are arranged at a distance from one another, and in that each of these extruders has a circular arrangement of discharge nozzles such that each of the extruders delivers at least one layer of buffered optical fibres for forming the multifibre unit.

31. Device according to one of Claims 17 to 19, characterized in that a tube store (RO) is provided which is mounted at one end and has a drive device (ZR, MO), in that the tube store (RO) is guided through a central bore (BO) of the extruder head (EK), and in that the buffered optical fibres (AD1-ADn) rest on the free end of the tube store (RO) and are stranded thereby.

32. Device according to Claim 31, characterized in that the tube store (RO) has a continuous bore which serves to guide the central element (CE1).

33. Device according to one of Claims 17-32, characterized in that there is provided upstream of the extruder head (EK) a filling device (FE) through which the optical fibres (LW1-LWn) can be guided, and in that this filling device (FE) is fed a substance (FM) serving as buffered fibre filling compound.

34. Device according to one of Claims 17 to 19, characterized in that a space-fixed supply drum (TR) is provided for the central element (CE), in that the extruder head (EK7) for producing the buffered optical fibres (AD1-ADn) is constructed in a fashion rotating about the longitudinal axis of the central element (CE), in that the supply reels (VS1-VSn) for the optical fibres are accommodated in a rotating stranding basket (VK) and in that the take-up drum (AT7) for the finished cable or the multifibre unit is likewise arranged fixed in space (Figure 7).

## Revendications

1. Procédé de fabrication d'un câble (OC) optique comportant au moins deux brins (AD1 à ADn) de fibre optique, au moins deux gaines (SH1) entourant chacune au moins une fibre optique (LW1 à LWn) et formant un brin (AD1 à ADn) de fibre optique autonome étant fabriquées par extrusion, et une gaine (MA) de câble étant déposée extérieurement, caractérisé en ce que les fibres optiques (LW1 à LWn) sont envoyées à une extrudeuse (EX), de manière excentrée, dans des voies séparées, en ce que, par cette extrudeuse (EX), il est produit en même temps les brins (AD1 à ADn) de fibre optique qui sont au moins au nombre de deux, et en ce que ces brins (AD1 à ADn) de fibre optique sont approchés les uns des autres après un refroidissement et une rigidification suffisants et soumis immédiatement après à une opération de toronnage pour former un faisceau (ADB) de brins.

2. Procédé suivant la revendication 1, caractérisé en ce que, pour mettre en oeuvre l'opération de toronnage dans une extrudeuse (EX) fixe, on utilise un élément (CE) central qui s'étend au centre de faisceau (ADB) de brins, qui tourne par rapport à son axe longitudinal et qui est tiré d'un tambour de réserve.

3. Procédé suivant la revendication 2, caractérisé en ce qu'on utilise un tambour (TR) de réserve tournant par rapport à l'axe longitudinal de l'élément central tiré, et en ce que le câble (OC) optique fini est enroulé sur un tambour (AT) tournant également par rapport à l'axe longitudinal de l'élément (CE) central.

4. Procédé suivant une des revendications 2 ou 3, caractérisé en ce que les brins (AD1 à ADn) de fibre optique sont déposés sur un tube (RO) fixe dans l'espace, en ce que ce tube (RO) effectue un mouvement de rotation, et en ce que les brins (AD1 à ADn) de fibre optique sont soumis à un toronnage par la rotation du tube et d'un disque (VS) de toronnage.

5. Procédé suivant la revendication 4, caractérisé en ce que l'on fait passer l'élément (CE) central à l'intérieur du tube (RO).

6. Procédé suivant une des revendications 2 à 5, caractérisé en ce que l'élément (CE) central est saisi et tordu au moyen d'un frein (BR) tournant par rapport à l'axe du passage, en ce que les brins (AD1 à ADn) de fibre optique sont déposés et toronnés sur l'élément (CE) central tournant ainsi en raison de la torsion, et en ce que le faisceau (ADB) de brins ainsi obtenu est saisi par un dispositif (TW) tordeur, tournant par rapport à l'axe du passage, et est fait tourner de la même façon que par le frein (BR).

7. Procédé suivant la revendication 6, caractérisé en ce que l'on fait fonctionner de manière fixe dans l'espace le tambour (TR) de déroulement pour l'élément (CE) central et le tambour (AT) d'enroulement pour le câble (OC) optique.

8. Procédé suivant la revendication 6 ou 7, caractérisé en ce que, en amont de l'entrée dans le frein (BR), l'élément (CE) central est guidé par l'intermédiaire d'un danseur (TZ) agissant comme frein mécanique.

9. Procédé suivant les revendications 6 à 8, caractérisé en ce que, en amont du frein et en aval du dispositif (TW) tordeur, le faisceau (ADB) de brins passe librement sur une plus grande longueur, notamment sur 2 à 20 m, ce passage étant utilisé comme réserve de torsion.

10. Procédé suivant les revendications 6 à 9, caractérisé en ce que le faisceau (ABD) de brins est, après avoir quitté le dispositif (TW) tordeur, envoyé à une chenille (ZR) de traction qui sert à la commande mécanique du tirage de l'élément central et du faisceau (ABD) de brins.

11. Procédé suivant la revendication 1, caractérisé en ce que l'on fait fonctionner de manière fixe dans l'espace le tambour (TR7) de déroulement de l'élément (CE) central et le tambour (AT7) d'enroulement du câble (OC) optique, en ce que les bobines (VS1 à VSn) de réserve sont montées dans un réservoir (VK) de toronnage et en ce qu'on les fait fonctionner en rotation conjointement à lui, et en ce qu'on fait fonctionner en rotation la tête (EK7) d'extrusion de l'extrudeuse (EX7) servant à la formation des brins (AD1 à ADn) de fibre optique.

12. Procédé suivant une des revendications précédentes, caractérisé en ce que les fibres optiques traversent des alésages (SB1,SB6) ménagés dans la tête (EK) d'extrusion, ces alésages étant ménagés concentriquement par rapport aux buses (SO1 à SO6) de sortie destinées à la formation de la gaine (SH1 ) du brin (AD1) associé de fibre optique.

13. Procédé suivant une des revendications précédentes, caractérisé en ce qu'on dépose plusieurs couches de brins de fibre optique extrudés en même temps.

14. Procédé suivant la revendication 13, caractérisé en ce que, à partir d'une tête (EK) d'extrusion, on produit, de manière annulaire, deux couches de brins de fibre optique obtenues en des diamètres différents.

15. Procédé suivant une des revendications 1 à 13, caractérisé en ce que, dans une première extrudeuse, on produit une première couche de brins de fibre optique et on l'assemble en un faisceau de brins, et que, ensuite, au moyen d'une deuxième extrudeuse, on dépose une autre couche de brins de fibre optique sur le premier faisceau de brins.

16. Procédé suivant une des revendications 1 à 13, caractérisé en ce qu'on effectue le toronnage des brins (AD1 à ADn) en ayant un sens de rotation alternant, c'est-à-dire en toronnage SZ.

17. Dispositif de mise en oeuvre du procédé suivant une des revendications précédentes, caractérisé en ce qu'il est prévu une extrudeuse (EX) dont la tête (EK) d'extrusion comporte de manière répartie sur le pourtour une série d'alésages (SB1 à SBn) continus, qui servent à guider des fibres optiques (LW1 à LWn), en ce qu'il est prévu concentriquement par rapport à cela des buses (SO1 à SO6) de sortie d'un matériau extrudé de gaine des brins (AD1 à ADn) de fibre optique, en ce que, à la suite de l'extrudeuse, un dispositif (KE) de refroidissement est prévu de manière que les brins (AD1 à ADn) de fibre optique soient suffisamment refroidis et rigidifiés, et en ce qu'il est prévu en aval du dispositif (KE) de refroidissement des moyens qui permettent un toronnage des brins de fibre optique arrivant de la tête d'extrusion.

18. Dispositif suivant la revendication 17, caractérisé en ce qu'il est prévu en amont de l'extrudeuse (EX) un tambour (TR) de déroulement d'un élément (CE) central.

19. Dispositif suivant la revendication 18, caractérisé en ce que les dispositifs tordeurs prévus pour l'élément (CE) central sont tel que les brins (AD1 à ADn) de fibre optique reçoivent de manière imprimée, par entraînement, un toronnage.

20. Dispositif suivant la revendication 19, caractérisé en ce que le tambour (TR) de déroulement de l'élément (CE) central et le tambour (AT) d'enroulement du câble (OC) fini sont montés tournants par rapport à l'axe longitudinal de l'élément (CE) central allongé.

21. Dispositif suivant la revendication 19, caractérisé en ce que le tambour (TR) de réserve de l'élément (CE) central et le tambour (AT) d'enroulement du câble (OC) fini sont montés de manière fixe dans l'espace, en ce qu'il est prévu en amont de l'extrudeuse (EX) un frein (BR) qui peut tourner par rapport à l'axe longitudinal de l'élément (CE) central et qui imprime une torsion à l'élément (CE) central, et en ce qu'il est prévu en aval de l'extrudeuse (EX) un dispositif tordeur qui saisit le faisceau (ADB) de fibre optique formé par les brins de fibre optique et qui peut tourner également par rapport à l'axe longitudinal de l'élément (CE) central, et en ce que l'entraînement des mouvements de rotation tant du frein (BR) que du dispositif (TW) tordeur s'effectue de manière que tous deux tournent en synchronisme et dans le même sens.

22. Dispositif suivant la revendication 21, caractérisé en ce qu'il est prévu en aval du dispositif (TW) tordeur un passage rectiligne du faisceau (ADB) de brins, de préférence sur une longueur comprise entre 2 m et 20 m, servant de réserve de torsion.

23. Dispositif suivant les revendications 21 ou 22, caractérisé en ce qu'il est prévu en aval du dispositif (TW) tordeur, à une distance adéquate, une chenille (ZR) de traction, qui exerce la traction longitudinale nécessaire sur l'élément (CE) central et sur le faisceau (ADB) de brins.

24. Dispositif suivant une des revendications 20 à 23, caractérisé en ce que les moyens de mise en oeuvre de l'opération de toronnage sont conçus de manière à obtenir un sens de toronnage alternant (toronnage SZ) des brins (AD1 à ADn) de fibre optique.

25. Dispositif suivant la revendication 24, caractérisé en ce qu'il est prévu en aval de l'extrudeuse (EX) des moyens (VB) pour déposer un filament (BW) de maintien sur le faisceau (ADB) de brins.

26. Dispositif suivant une des revendications 21 à 25, caractérisé en ce que le tambour (TR) de déroulement et le tambour (AT) d'enroulement sont montés fixes dans l'espace.

27. Dispositif suivant une des revendications 17 à 26, caractérisé en ce ( qu'il est prévu au moins une autre extrudeuse (EX1) pour déposer une gaine de câble.

28. Dispositif suivant une des revendications 17 à 27, caractérisé en ce que la tête (EK) d'extrusion comporte un alésage (BO) central que l'on peut faire traverser l'élément (CE) central.

29. Dispositif suivant une des revendications 17 à 28, caractérisé en ce que la tête (EK) d'extrusion comporte plusieurs séries concentriques de buses (SO1 à SO6, SO21 à SO29) d'extrusion qui servent à la formation d'une deuxième couche de brins de fibre optique.

30. Dispositif suivant une des revendications 17 à 29, caractérisé en ce qu'il est monté plusieurs extrudeuses à distance les unes des autres, en ce que chacune de ces extrudeuses comporte un dispositif circulaire de buses de sortie de manière que chacune des extrudeuses fournisse au moins une couche de brins de fibre optique en vue de la formation du faisceau de brins.

31. Dispositif suivant une des revendications 17 à 19, caractérisé en ce qu'il est prévu un réservoir (RO) tubulaire, qui est monté en palier d'un seul côté et qui comporte un dispositif (ZR, MO) d'entraînement, en ce que l'on fait passer le réservoir (RO) tubulaire par un alésage (BO) central de la tête (EK) d'extrusion, et en ce que les brins (AD1 à ADn) de fibre optique reposent sur l'extrémité libre du réservoir (RO) tubulaire et sont munis d'un toronnage par ce réservoir.

32. Dispositif suivant la revendications 31, caractérisé en ce que le réservoir (RO) tubulaire comporte un alésage continu, qui sert à guider l'élément (CET ) central.

33. Dispositif suivant une des revendications 17 à 32, caractérisé en ce qu'il est prévu en amont de la tête (EK) d'extrusion un dispositif (FE) d'alimentation, par lequel on peut faire passer les fibres (LW1 à LWn) optiques, et en ce qu'il est envoyé à ce dispositif (FE) d'alimentation une substance (FM) servant de charge des brins.

34. Dispositif suivant une des revendications 17 à 19, caractérisé en ce qu'il est prévu un tambour (TR) de réserve, fixe dans l'espace, de l'élément (CE) central, en ce que la tête (EK7) d'extrusion destinée à la production des brins (AD1 à ADn) de fibre optique est montée tournante par rapport à l'axe longitudinal de l'élément (CE) central, en ce que les bobines (VS1 à VSn) de fibres optiques sont logées dans un réservoir (VK) de toronnage tournant, et en ce que le tambour (AT7) d'enroulement du câble fini et du faisceau de brin est également monté fixe dans l'espace (figure 7).
